# EUROPEAN PATENT SPECIFICATION

(11) **EP 2 090 808 B1**
(45) Date of publication and mention of the grant of the patent: **28.09.2011**
(21) Application number: 09250321.8
(22) Date of filing: 09.02.2009
(51) Int. Cl.: F16H 61/02, F16H 61/10, F16H 63/42

(54) **Gear shift indicator and gear shift indicating method**
Gangschaltungsanzeige und Gangschaltungsanzeigeverfahren
Indicateur de levier de vitesse et procédé d'indication de levier de vitesse

(30) Priority: 18.02.2008 JP 2008036000
(43) Date of publication of application: 19.08.2009
(73) Proprietor: Toyota Jidosha Kabushiki Kaisha, Toyota-shi, Aichi-ken 471-8571 (JP)
(72) Inventor: Ohkubo, Tadanao c/o Toyota Jidosha Kabushiki Kaisha, Toyota-shi, Aichi-ken 471-8571 (JP)
(74) Representative: Albutt, Anthony John

(56) References cited:
- EP-A- 1 826 461
- EP-A- 1 887 262
- US-A- 4 539 868
- US-A- 4 723 215

## Description

### BACKGROUND OF THE INVENTION

### 1. Field of the Invention

The invention relates to a gear shift indicator and a gear shift indicating method for instructing a driver to shift into a gear suitable for the running state of a vehicle, according to the preamble of claims 1, 10 and as it is disclosed in EP 1 826 461 A.

### 2. Description of the Related Art

A gear shift indicator is known which instructs a driver to shift appropriately based on the relationship between the vehicle speed and the accelerator operating amount or the throttle opening amount. For example, Japanese Patent Application Publication No. 2007-225096 (JP-A-2007-225096) describes a gear shift indicator that inhibits a shift instruction that is against the intention of the driver from being given. This gear shift indicator is provided in the vehicle and instructs the driver to shift a transmission capable of being shifted into forward running gears according to an operation by the driver. This transmission is a manual transmission or an automatic transmission having a manual shift mode. The gear shift indicator includes instructing means for instructing the driver to shift the transmission, and controlling means for controlling the instructing means to instruct the driver to shift the transmission into a higher gear (i.e., upshift) or a lower gear (i.e., downshift) based on a shift instructing signal generated according to the state of the vehicle using a shift map. The controlling means includes means for detecting when a downshift is performed and prohibiting an upshift instruction from being given until a preset period of time has passed after the downshift has been detected.

According to the gear shift indicator described in JP-A-2007-225096, when a vehicle which is accelerating is shifted into a lower gear (i.e., is downshifted), the throttle opening amount closes fully so an instruction to shift into a higher gear (i.e., an upshift instruction) is prohibited until a preset period of time has passed even if an upshift line is crossed to the upshift side. That is, the driver will not be instructed to upshift after he or she has just intentionally shifted the transmission into a lower gear, thus sparing the driver from the irritation that may be felt by receiving such an instruction while the vehicle is accelerating. Also, an instruction to upshift is allowed after a preset period of time has passed. Therefore, the gear shift indicator can instruct the driver to shift appropriately according to the state of the vehicle when a shift ends and the throttle opening amount has returned to the position before the shift.

However, if a shift instruction is constantly delayed, regardless of the state of the vehicle, the driver may end up receiving a necessary shift instruction late. For example, when the vehicle is climbing a hill, the vehicle may not have enough driving force even if the driver downshifts. Therefore, if a shift instruction is constantly delayed, it may take time for the driver to recognize that the driving force of the vehicle is insufficient. Thus, a constant delay in a shift instruction results in a shift which is performed by driver in accordance with that shift instruction being late, which may result in engine stall.

The gear shift indicator described in JP-A-2007-225096 does not take this kind of problem into account.

### SUMMARY OF THE INVENTION

This invention thus provides a gear shift indicator and gear shift indicating method for instructing the driver to shift appropriately according to the state of the vehicle.

A first aspect of the invention relates to a gear shift indicator having the features of claim 1.

According to the gear shift indicator of this first aspect of the invention, if the driving force of the vehicle is insufficient even if the gear after the shift ends is lower than the gear before the shift starts, a shift into an even lower gear is necessary. In this case, the driver can be instructed to shift into a lower gear even earlier by setting the start time from when the shift ends until the driver starts to be instructed to shift shorter. Therefore, the driver is able to recognize early on that the driving force of the vehicle is insufficient. As a result, the driver can be instructed early on to perform an appropriate shift that will prevent the engine from stalling. Meanwhile, appropriate times are set as start times for the other shift modes as well, which makes it possible to reliably prevent an instruction from being given that is against the intention of the driver, such as an upshift instruction right after the driver has just downshifted, for example. Accordingly, a gear shift indicator that instructs a driver to shift appropriately according to the state of the vehicle state is able to be provided.

The setting means may set a predetermined value as the start time when the gear after the shift ends is a lower gear than the gear before the shift starts and it is determined by the second determining means that there is a need for the driver to shift into a lower gear. Also, the predetermined value may be the lowest value from among a plurality of predetermined values corresponding to a first shift mode that is based on the gear after the shift by the driver ends and the gear before the shift by the driver starts, and a second shift mode that is based on the determination results from the first determining means and the second determining means.

According to this gear shift indicator, by setting the lowest value from among a plurality of predetermined values as the start time, the driver is able to be instructed to downshift earlier than he or she is with the other shift modes. As a result, the driver can be instructed early on to perform an appropriate shift that will prevent the engine from stalling due to insufficient vehicle driving force.

The setting means may set the start time to zero when the gear after the shift ends is a lower gear than the gear before the shift starts and it is determined by the second determining means that there is a need for the driver to shift into a lower gear.

The transmission may be connected via a clutch to a power source mounted in the vehicle. Also, the shift detecting means may detect the state of the shift based on the operating state of the clutch.

According to this gear shift indicator, whether a shift by the driver has ended can be accurately determined by detecting the operating state of the clutch (e.g., whether the clutch is applied or released) because the clutch is always operated during a shift.

The transmission may shift gears in response to operation of a shift lever by the driver, and the shift detecting means may detect the state of the shift based on the state of the shift lever.

The transmission may be connected to a power source mounted in the vehicle. Also, the detecting means may include physical quantity detecting means for detecting a physical quantity related to the speed of the vehicle, and degree-of-requirement detecting means for detecting the degree to which an increase in output of the power source is required.

According to this gear shift indicator, it is possible to accurately determine whether a shift into a higher gear is necessary, as well as whether a shift into a lower gear is necessary, based on the gear after a shift ends, a shift map, a physical quantity relating to the speed of the vehicle (such as the wheel speed or the rotation speed of the output shaft of the transmission), and the degree to which an increase in output of the power source is required.

The physical quantity detecting means may detect i) a wheel speed or ii) a rotation speed of an output shaft of the transmission as the physical quantity.

The degree-of-requirement detecting means may detect i) an accelerator operating amount or ii) a throttle opening amount as the degree to which an increase in output of the power source is required.

After the driver is instructed to shift, the instructing means may keep instructing the driver to shift until the shift by the driver ends or until the determination results change.

A second aspect of the invention relates to a gear shift indicating method having the features of claims 10.

In setting the start time, a predetermined value may be set as the start time when the gear after the shift ends is a lower gear than the gear before the shift starts and it is determined by the second determination that there is a need for the driver to shift into a lower gear. Also, the predetermined value may be the lowest value from among a plurality of predetermined values corresponding to a first shift mode that is based on the gear after the shift ends and the gear before the shift starts, and a second shift mode that is based on the determination results from the first determination and the second determination.

In setting the start time, the start time may be set to zero when the gear after the shift ends is a lower gear than the gear before the shift starts and it is determined by the second determination that there is a need for the driver to shift into a lower gear.

Detecting the state of the shift may be done based on the operating state of a clutch of the transmission that is connected, via the clutch, to a power source mounted in the vehicle.

Detecting the state of the shift may be done based on the state of a shift lever of the transmission which shifts gears in response to operation of the shift lever by the driver.

Detecting the state of the vehicle may include detecting the speed of the vehicle, and detecting the degree to which an increase in output of a power source mounted in the vehicle and connected to the transmission is required.

The speed of the vehicle may be detected based on i) a wheel speed or ii) a rotation speed of an output shaft of the transmission.

The degree to which an increase in output of the power source is required may be detected based on i) an accelerator operating amount or ii) a throttle opening amount.

Instructing the driver to shift may include continuing to instruct the driver to shift after the driver is instructed to shift until the shift by the driver ends or until the determination results change.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is block diagram schematically showing a power train of a vehicle provided with a gear shift indicator according to an example embodiment of the invention;
FIG. 2 is an external view of a combination meter in this example embodiment;
FIG 3 is a view of a shift map based on the relationship between vehicle speed and throttle opening amount according to the example embodiment;
FIG. 4 is a functional block diagram of an ECU that makes up part of the gear shift indicator according to the example embodiment;
FIGS. 5, 6, and 7 are flowcharts illustrating the control structure of a program executed by the ECU that makes up part of the gear shift indicator according to the example embodiment; and
FIG 8 is a timing chart showing the operation of the gear shift indicator according to the example embodiment.

### DETAILED DESCRIPTION OF THE EMBODIMENTS

Example embodiments of the present invention will be described in greater detail below with reference to the accompanying drawings. In the following description, like parts will be denoted by like reference characters and referred to by the same nomenclature and have the same functions. Therefore, detailed descriptions of those parts will not be repeated.

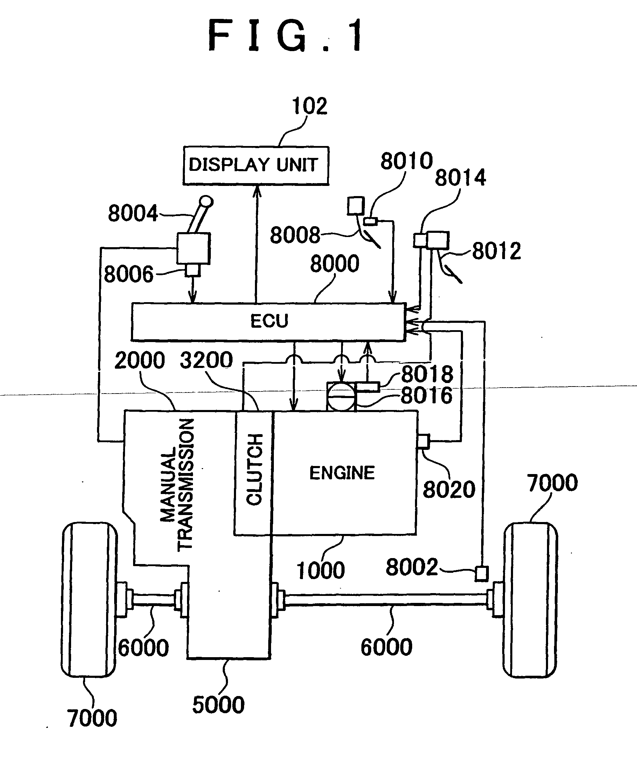

A vehicle provided with a gear shift indicator according to an example embodiment of the invention will now be described with reference to FIG. 1. This vehicle is a FF (Front-engine, Front-drive) vehicle but is not limited to such.

The vehicle includes an engine 1000, a manual transmission 2000, a clutch 3200, a differential gear 5000, a drive shaft 6000, front wheels 7000, and an ECU (Electronic Control Unit) 8000.

The engine 1000 is an internal combustion engine which burns a mixture of air and fuel injected by fuel injectors, not shown, in a combustion chamber of a cylinder. Force generated by the combustion of this air-fuel mixture forces a piston in the cylinder down, which causes a crankshaft to rotate.

The manual transmission 2000 is connected to the engine 1000 via the clutch 3200. The manual transmission 2000 changes the rate and direction of rotation output from the crankshaft to the desired rate and direction according to a gear selected through an operation of a shift lever 8004 by a driver. The shift lever 8004 and the manual transmission 2000 are connected via a control cable such as a push-pull cable, for example. Accordingly, when the shift lever 8004 is shifted into a position corresponding to 1st gear, for example, a gear corresponding to 1st gear is established in the manual transmission 2000. Incidentally, the structure of the manual transmission 2000 is well known so it will not be described in detail.

The clutch 3200 is connected to a clutch pedal 8012 via a hydraulic circuit and a clutch cylinder, neither of which are shown. The clutch 3200 is structured such that when the driver depresses the clutch pedal 8012, the clutch cylinder increases the hydraulic pressure in the hydraulic circuit such that the transmission of power between the engine 1000 and the manual transmission 2000 is interrupted. Also, when the driver releases the clutch pedal 8012, power is transmitted between the engine 1000 and the manual transmission 2000. The clutch pedal 8012 is provided with a clutch switch 8014 that sends an ON signal to the ECU 8000 when the depression amount (i.e., stroke amount) of the clutch pedal 8012 becomes equal to or greater than a preset depression amount. Incidentally, a clutch pedal stroke sensor may be used instead of the clutch switch 8014.

An output gear of the manual transmission 2000 is in mesh with the differential gear 5000. A drive shaft 6000 is connected by spline engagement or the like to the differential gear 5000. Power is transmitted to right and left front wheels 7000 via the drive shaft 6000.

The ECU 8000 is connected via a harness and the like to a vehicle speed sensor 8002, a position switch 8006 of the shift lever 8004, an accelerator depression amount sensor 8010 of an accelerator pedal 8008, the clutch switch 8014 of the clutch pedal 8012, a throttle opening amount sensor 8018 of an electronic throttle valve 8016, and an engine speed sensor 8020.

The vehicle speed sensor 8002 detects the speed of the vehicle from the rotation speed of the drive shaft 6000 and outputs the detection results to the ECU 8000. The position of the shift lever 8004 is detected by the position switch 8006 and the detection results are output to the ECU 8000.

The accelerator depression amount sensor 8010 detects the depression amount of the accelerator pedal 8008 and outputs the detection results to the ECU 8000. The accelerator depression amount corresponds to the degree to which an increase in output from the engine 1000 is required.

The throttle opening amount sensor 8018 detects the opening amount of the electronic throttle valve 8016, the opening amount of which is adjusted by an actuator, and outputs the detection results to the ECU 8000. The amount of air drawn into the engine 1000 is adjusted by the electronic throttle valve 8016, and the output of the engine 1000 is adjusted by adjusting the amount of air drawn into the engine 1000.

The engine speed sensor 8020 detects the rotation speed of an output shaft (i.e., the crankshaft) of the engine 1000 and outputs the detection results to the ECU 8000.

A display unit 102 is provided in a location visible from the driver's seat. The display unit 102 can display an instruction for the driver to shift into a lower gear (hereinafter, referred to as a "downshift instruction"), or an instruction for the driver to shift into a higher gear (hereinafter, referred to as an "upshift instruction").

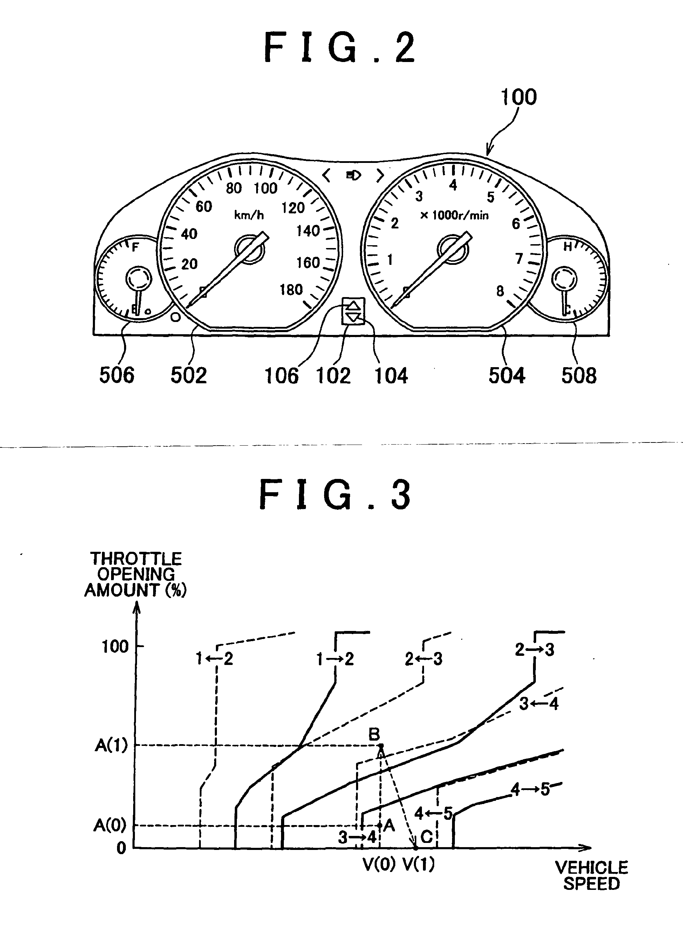

More specifically, as shown in FIG. 2, the display unit 102 is provided in a combination meter 100 which is visible from the driver's seat. This combination meter 100 includes a speedometer 502, a tachometer 504, a fuel gauge 506, a water temperature gauge 508, and the display unit 102.

The display unit 102 has a triangular upshift instruction lamp (hereinafter simply referred to as "upshift lamp") 106 pointing upward toward the top of the paper on which FIG 2 is drawn, and a triangular downshift instruction lamp (hereinafter simply referred to as "downshift lamp") 104 pointing downward toward the bottom of the paper on which FIG 2 is drawn. In this example embodiment, when the upshift lamp 106 is illuminated, it signifies an instruction to the driver to upshift. Similarly, when the downshift lamp 104 is illuminated, it signifies an instruction to the driver to downshift. Furthermore, when neither the upshift lamp 106 nor the downshift lamp 104 are illuminated (i.e., when both of the lamps 106 and 104 are off), it signifies that neither an upshift instruction nor a downshift instruction is given (i.e., it indicates that the current gear should be maintained).

Incidentally, the upshift lamp 106 and the downshift lamp 104 are illuminated using LEDs (Light Emitting Diodes), for example, but are not particularly limited to LEDs. For example, the display unit 102 may use a liquid crystal panel such as an LCD (Liquid Crystal Display) or the like instead of the upshift lamp 106 and the downshift lamp 104. That is, the display unit 102 may display on a liquid crystal panel a triangular graphic that points upward toward the top of the paper on which FIG 2 is drawn to indicate an upshift instruction, and a triangular graphic that points downward toward the bottom of the paper on which FIG 2 is drawn to indicate a downshift instruction.

Also, the upshift lamp 106 and the downshift lamp 104 are not limited to being triangular. For example, the upshift lamp 106 may be in the shape of an arrow that points upward toward the top of the paper on which FIG 2 is drawn, and the downshift lamp 104 may be in the shape of an arrow that points downward toward the bottom of the paper on which FIG. 2 is drawn.

Moreover, the display unit 102 may display the gear that is currently selected and the gear corresponding to the shift instruction, instead of the display that corresponds to the upshift instruction and the downshift instructions Alternatively, only the gear corresponding to the shift instruction may be displayed. That is, when the gear corresponding to the shift instruction is lower than the currently selected gear, the driver can determine that he or she is being instructed to downshift. Similarly, when the gear corresponding to the shift instruction is higher than the currently selected gear, the driver can determine that he or she is being instructed to upshift.

Upon receiving a signal corresponding to an upshift instruction or a downshift instruction from the ECU 8000, the display unit 102 displays an upshift instruction or a downshift instruction according to the received signal. That is, the display unit 102 illuminates the upshift lamp 106 when it receives a signal corresponding to an upshift instruction from the ECU 8000, and illuminates the downshift lamp 104 when it receives a signal corresponding to a downshift instruction from the ECU 8000.

The ECU 8000 controls a variety of equipment to achieve the desired vehicle running state based on signals sent from the vehicle speed sensor 8002, the position switch 8006, the accelerator depression amount sensor 8010, the clutch switch 8014, the throttle opening amount 8018, and the engine speed sensor 8020 and the like, as well as maps and programs stored in ROM (Read Only Memory). Furthermore, the ECU 8000 outputs signals corresponding to upshift instructions and downshift instructions according to the running state of the vehicle. Incidentally, the gear shift indicator according to this example embodiment is made up of the vehicle speed sensor 8002, the accelerator depression amount sensor 8010, the clutch switch 8014, the engine speed sensor 8020, the ECU 8000, and the display unit 102. Also, the degree to which an increase in output from the engine 1000 is required may be detected using the throttle opening amount sensor 8018 instead of the accelerator depression amount sensor 8010.

The ECU 8000 sends a signal indicative of an upshift instruction or a downshift instruction to the display unit 102 based on the currently selected gear, the vehicle speed, and the throttle opening amount. A shift map having shift lines for downshifts (i.e., downshift lines) (as shown by the broken lines in FIG 3) and shift lines for upshifts (i.e., upshift lines) (as shown by the solid lines in FIG 3) which are defined in advance and correspond to vehicle speeds and throttle opening amounts, as shown in FIG 3, is stored in advance in the memory of the ECU 8000. Incidentally, in FIG 3, the horizontal axis represents the vehicle speed and the vertical axis represents the throttle opening amount. The shift map shown in FIG. 3 is the same as a shift map that is used when the vehicle is operating with the automatic transmission in a forward gear.

The downshift lines shown by the broken lines in FIG. 3 define the timing at which downshifts are performed. That is, each downshift line serves as a boundary line and when a position specified on the map in FIG 3 based on the detected throttle opining amount and the vehicle speed moves from the region to the right of the downshift line to the region to the left of the downshift line, the ECU 8000 determines whether a downshift is required based on the currently selected gear. If the ECU 8000 determines that a downshift is required, the ECU 8000 outputs a signal indicative of a downshift instruction to the display unit 102. The display unit 102 then illuminates the downshift lamp 104 in response to receiving the signal indicative of the downshift instruction. A downshift line is defined for each gear. If the position specified in FIG. 3 based on the detected throttle opening amount and the vehicle speed crosses the "1 ← 2" downshift line shown in FIG. 3, for example, the ECU 8000 determines that a shift from 2nd gear to 1st gear is required. Incidentally, in the same way, if that position crosses the "2 ← 3", "3 ← 4", or ← 5" downshift line, the ECU 8000 determines that a downshift from 3rd gear to 2nd gear, 4th gear to 3rd gear, or 5th gear to 4th gear, respectively, is required.

The upshift lines shown by the solid lines in FIG 3 define the timing at which upshifts are performed. That is, each upshift line serves as a boundary line and when a position specified in FIG 3 based on the detected throttle opening amount and the vehicle speed moves from the region to the left of the upshift line to the region to the right of the upshift line, the ECU 8000 determines whether a upshift is required based on the currently selected gear. If the ECU 8000 determines that an upshift is required, the ECU 8000 outputs a signal indicative of an upshift instruction to the display unit 102. The display unit 102 then illuminates the upshift lamp 106 in response to receiving the signal indicative of the upshift instruction. An upshift line is defined for each gear. If the position specified in FIG. 3 based on the detected throttle opening amount and the vehicle speed crosses the "1 → 2" upshift line shown in FIG 3, for example, the ECU 8000 determines that a shift from 1st gear to 2nd gear is required. Incidentally, in the same way, if that position crosses the "2 → 3", "3 → 4", or "4 → 5" upshift line, the ECU 8000 determines that an upshift from 2nd gear to 3rd gear, 3rd gear to 4th gear, or 4th gear to 5th gear, respectively, is required.

In the gear shift indicator structured as described above, when the vehicle speed is V(U) and the throttle opening amount is A(0) (as shown by point A in FIG 3), it is assumed that the driver is depressing the accelerator pedal 8008 to accelerate the vehicle. Then when the throttle opening amount changes from A(0) to A(1) as a result of the driver depressing the accelerator pedal 8008, the position specified based on the vehicle speed and the throttle opening amount moves from point A to point B. Because point A is in the region to the right of the "3 ← 4" downshift line and point B is in the region to the left of the "3 ← 4" downshift line, the ECU 8000 determines that a shift from 4th speed to 3rd speed is necessary at this time. So using the gear shift indicator control method of the related art, when the current gear is 4th gear, the ECU 8000 sends a signal indicative of a downshift to the display unit 102 which then illuminates the downshift lamp 104.

When the driver shifts the manual transmission 2000 from 4th gear to 3rd gear in response to the illumination of the downshift lamp 104, the driver lets up on the accelerator pedal 8008. For example, when the driver lets up on the accelerator pedal 8008 so that the throttle opening amount is substantially zero, the specified position in FIG. 3 based on the vehicle speed and the throttle opening amount shifts from point B to point C. Because point B is in the region to the left of the "3 → 4" upshift line and point C is in the region to the right of the "3 → 4" upshift line, the ECU 8000 determines that a shift from 3rd speed to 4th speed is necessary at this time. So using the gear shift indicator control method of the related art, ECU 8000 sends a signal indicative of an upshift to the display unit 102 which then illuminates the upshift lamp 106.

In this way, when using the control method of the gear shift indicator according to the related art, the upshift lamp 106 may illuminate right after a downshift because the driver lets up on the accelerator pedal 8008 when shifting, despite the fact that the driver intentionally downshifted to accelerate the vehicle. This shift instruction may therefore be annoying to the driver. Accordingly, using the control method of the gear shift indicator according to other related art, the ECU 8000 prohibits the upshift lamp 106 from illuminating for a predetermined period of time by starting a timer when the downshift ends. The ECU 8000 then allows the upshift lamp 106 to illuminate after the predetermined period of time has passed from the time the timer is started.

However, if a shift instruction is constantly delayed, regardless of the state of the vehicle, the driver may end up receiving a necessary shift instruction late. For example, when the vehicle is climbing a hill, the vehicle may not have enough driving force even if the driver downshifts. Therefore, when a shift instruction is constantly delayed, it may take time for the driver to recognize that the driving force of the vehicle is insufficient. Thus, a constant delay in a shift instruction results in a shift which is performed by driver in accordance with that shift instruction being late, which may result in engine stall.

Therefore, in the gear shift indicator of this example embodiment, when the gear after a shift ends is lower than the gear before the shift started and it is determined that the driver needs to downshift after the shift ends, the ECU 8000 sets the start time shorter than the start time when another determination is made (e.g., when it is not determined that the driver needs to downshift after the shift ends). The ECU 8000 instructs the driver to downshift once the set start time has passed.

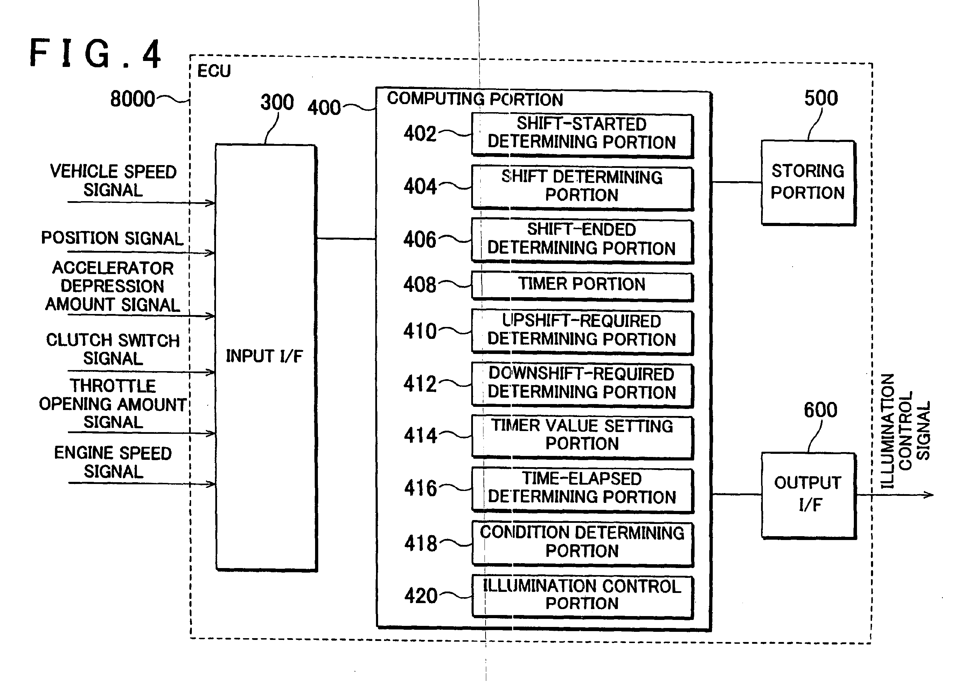

FIG 4 is a functional block diagram of the ECU 8000 that makes up part of the gear shift indicator according to this example embodiment. The ECU 8000 includes an input interface (hereinafter simply referred to as "input I/F") 300, a computing portion 400, a storing portion 500, and an output interface (hereinafter simply referred to as "output I/F") 600.

The input I/F 300 receives a vehicle speed signal from the vehicle speed sensor 8002, a position signal from the position switch 8006, an accelerator depression amount signal from the accelerator depression amount sensor 8010, a clutch switch signal from the clutch switch 8014, a throttle opening amount signal from the throttle opening amount sensor 8018, and an engine speed signal from the engine speed sensor 8020, and then sends those signals on to the computing portion 400.

The computing portion 400 includes a shift-started determining portion 402, a shift determining portion 404, an shift-ended determining portion 406, a timer portion 408, an upshift-required determining portion 410, a downshift-required determining portion 412, a timer value setting portion 414, a time-elapsed determining portion 416, a condition determining portion 418, and an illumination control portion 420.

The shift-started determining portion 402 determines whether a shift has started (i.e., whether the driver has started to shift gears). This shift-started determining portion 402 may determine that a shift has started when it has been determined that the clutch pedal 8012 has been depressed based on the clutch switch signal (i.e., when an ON signal is received from the clutch switch 8014), or when change in the position of the shift lever 8004 is detected based on the position signal. Incidentally, when it is determined that a shift has started, the shift-started determining portion 402 may also turn on a shift determination flag, for example.

The shift determining portion 404 determines whether the shift is an upshift. The shift determining portion 404 may determine that the shift is an upshift when, for example, the position of the shift lever 8004 based on the position signal changes to a position corresponding to a higher gear than the gear before the shift started, or when the gear ratio based on the engine speed and the vehicle speed at the time a clutch switch signal indicating that the clutch pedal 8012 has been released is received changes to a higher gear ratio than the gear ratio corresponding to the gear before the shift started. Incidentally, when it is determined that the shift is an upshift, the shift determining portion 404 may also turn on an upshift determination flag, for example.

The shift determining portion 404 determines whether the shift is a downshift. Similar to the upshift determination, the shift determining portion 404 may determine whether the shift is a downshift based on the position signal. Alternatively, the shift determining portion 404 may determine that the shift is a downshift when the gear ratio based on the engine speed and the vehicle speed at the time a clutch switch signal indicating that the clutch pedal 8012 has been released is received changes to a lower gear ratio than the gear ratio corresponding to the gear before the shift started. Incidentally, when it is determined that the shift is a downshift, the shift determining portion 404 may also turn on a downshift determination flag, for example.

The shift-ended determining portion 406 determines whether the shift has ended. The shift determining portion 404 may determine that the shift has ended when, for example, it is determined that the clutch pedal 8012 has been released based on the clutch switch signal (i.e., when an ON signal is not received from the clutch switch 8014). Alternatively, the shift determining portion 404 may determine that the shift has ended when the gear corresponding to the position of the shift lever 8004 based on the position signal is the same as the gear corresponding to the gear ratio of the transmission based on the engine speed and the vehicle speed after the clutch pedal 8012 is released. Incidentally, when it is determined that the shift has ended, the shift-ended determining portion 404 may also turn on a shift-ended determination flag, for example.

The timer portion 408 starts to measure the time elapsed after the shift ends. More specifically, using a count value as the initial value, the timer portion 408 measures the elapsed time by adding a preset count value for each measured cycle at the time it is determined that the shift ended.

The upshift-required determining portion 410 determines whether there is a need for the driver to upshift based on the state of the vehicle, the shift map, and the gear after the shift ends. The upshift-required determining portion 410 determines that there is a need for the driver to upshift when, for example, the gear specified as a result of a position on the shift map, which is based on the vehicle speed and the throttle opening amount, crossing an upshift line is a higher gear than the gear after the shift ends. Incidentally, the upshift-required determining portion 410 may determine whether there is a need for the driver to upshift when the shift-ended determining flag is on, for example, and when there is a need to upshift, the upshift-required determining portion 410 may turn on an upshift-required determining flag. The gear after the shift ends is determined based on the gear ratio which is based on the engine speed and the vehicle speed, for example.

The downshift-required determining portion 412 determines whether there is a need for the driver to downshift based on the state of the vehicle, the shift map, and the gear after the shift ends. The downshift-required determining portion 412 determines that there is a need for the driver to downshift when, for example, the gear specified as result of a position on the shift map, which is based on the vehicle speed and the throttle opening amount, crossing a downshift line is a lower gear than the gear after the shift ends. Incidentally, the downshift-required determining portion 412 may determine whether there is a need for the driver to downshift when the shift-ended determination flag is on, for example, and when there is a need to downshift, the downshift-required determining portion 412 may turn on a downshift-required determining flag.

The timer value setting portion 414 sets a timer value corresponding to a start time from when a shift ends until a shift instruction starts to be given to the driver, based on the gear after the shift ends, the gear before the shift starts, and the determination results from the upshift-required determining portion 410 and the downshift-required determining portion after the shift ends. Incidentally, the gear before the shift starts may be obtained by, for example, storing a gear each time it is established and reading the stored gear before the shift starts from the storing portion 500.

When the gear after the shift ends is a higher gear than the gear before the shift starts, the timer value setting portion 414 sets a predetermined timer value A if an upshift is required, and sets a predetermined timer value B if a downshift is required.

Also, when the gear after the shift ends is a lower gear than the gear before the shift starts, the timer value setting portion 414 sets a predetermined timer value C if an upshift is required, and sets a predetermined timer value D if a downshift is required.

Moreover, when the gear after the shift ends is the same as the gear before the shift starts, the timer value setting portion 414 sets a predetermined timer value E if an upshift is required, and sets a predetermined timer value F if a downshift is required.

A case in which the gear after the shift ends is the same as the gear before the shift starts corresponds to a case in which the driver shifts into the wrong gear or starts to shift but then stops and shifts back into the original gear before finishing the shift, for example.

The predetermined timer values A to F are set appropriately through testing or the like to times where at least the driver does not feel that the shift lamps are being illuminated frequently. However, in this example embodiment, the predetermined timer value D that corresponds to the start time when another downshift is required after a downshift has ended is set to the smallest value of the timer values A to F. Incidentally, the timer value D may also be set to zero, for example.

The time-elapsed determining portion 416 determines whether the elapsed time (i.e., the count value) measured by the timer portion 408 is equal to or greater than a timer value set in the timer value setting portion 414. The time-elapsed determining portion 416 may also turn on a time-elapsed determination flag when it is determined that the elapsed time is equal to or greater than the set timer value.

The condition determining portion 418 determines whether an illumination condition is satisfied. The illumination condition includes, for example, a condition that the elapsed time be equal to or greater than the set timer value, and a condition that there be no change in the required shift. Incidentally, the condition determining portion 418 may also turn on a condition determination flag when the illumination condition is satisfied. Also, the determination as to whether there is a change in the required shift may be made based on a change in the throttle opening amount (i.e., a change of a predetermined opening amount or more) or a change in the vehicle speed (i.e., a change of a predetermined speed or more) or the like.

When it is determined by the condition determining portion 418 that the illumination condition is satisfied, the illumination control portion 420 generates an illumination control signal to display a shift instruction corresponding to the required shift. The illumination control portion 420 then sends the generated illumination control signal to the display unit 102 via the output I/F 600.

For example, when the required shift is a downshift, the illumination control portion 420 sends an illumination control signal to the display unit 102 to illuminate the downshift lamp 104. Similarly, for example, when the required shift is an upshift, the illumination control portion 420 sends an illumination control signal to the display unit 102 to illuminate the upshift lamp 106.

Incidentally, for example, the illumination control portion 420 may also send an illumination control signal to the display unit 102 to illuminate the downshift lamp 104 when both the condition determination flag and the downshift determination flag are on, or the illumination control portion 420 may also send an illumination control signal to the display unit 102 to illuminate the upshift lamp 106 when both the condition determination flag and the upshift determination flag are on.

Also, the illumination control portion 420 may keep the downshift lamp 104 or the upshift lamp 106 illuminated until the next shift starts or until there is a change in the required shift. Moreover, the illumination control portion 420 may also control the display unit 102 to turn off the downshift lamp 104 or the upshift lamp 106 when the next shift starts or when there is a change in the required shift.

Incidentally, in this example embodiment, the shift-started determining portion 402, the shift determining portion 404, the shift-ended determining portion 406, the timer portion 408, the upshift-required determining portion 410, the downshift-required determining portion 412, the timer value setting portion 414, the time-elapsed determining portion 416, the condition determining portion 418, and the illumination control portion 420 are all described as portions which function as software and are all realized by a CPU (Central Processing Unit), i.e., the computing portion 400, executing a program stored in the storing portion 500. Alternatively, however, these portions may also be realized by hardware. Incidentally, this kind of program is stored in a recording medium mounted in the vehicle.

Various information, programs, threshold values, and maps and the like are stored in the storing portion 500 and are read by the computing portion 400 as necessary.

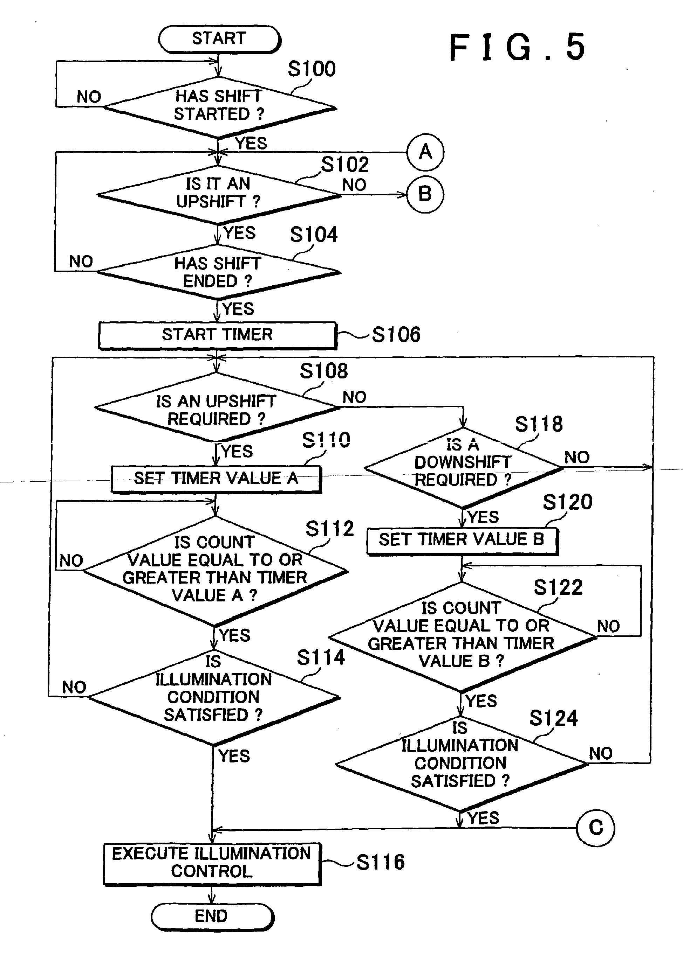

Hereinafter, the control structure of a program executed by the ECU 8000 that makes up part of the gear shift indicator of this example embodiment will be described with reference to FIGS. 5 to 7.

As shown in FIG. 5, is step S100 the ECU 8000 determines whether a shift has started. If a shift has started (i.e., YES in step S100), the process proceeds on to step S102. If not (i.e., NO in step S100), step S100 is repeated until a shift has started.

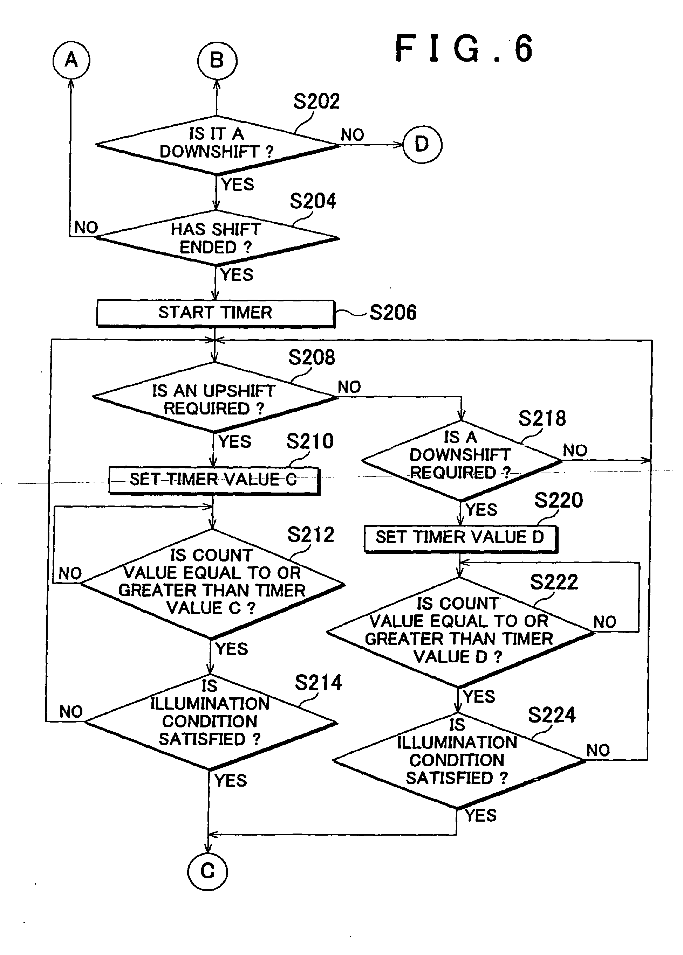

In step S102, the ECU 8000 determines whether the shift is an upshift. If the shift is an upshift (i.e., YES in step S102), the process proceeds on to step S104. If not (i.e., NO in step S102), the process proceeds on to step S202 in FIG 6.

In step S104, the ECU 8000 determines whether the shift has ended. If the shift has ended (i.e., YES in step S104), the process proceeds on to step S106. If not (i.e., NO in step S104), the process returns to step S102.

In step S106, the ECU 8000 starts to measure the elapsed time by starting a timer. Then in step S108, the ECU 8000 determines whether an upshift is required. If an upshift is required (i.e., YES in step S108), the process proceeds on to step S110. If not (i.e., NO in step S 108), the process proceeds on to step S118.

In step S110, the ECU 8000 sets the timer value A. Then in step S112, the ECU 8000 determines whether the count value of the timer is equal to or greater than the timer value A. If the count value is equal to or greater than the timer value A (i.e., YES in step S112), the process proceeds on to step S114. If not (i.e., NO in step S112), step S112 is repeated until the count value is equal to or greater than the timer value A, after which the process proceeds on to step S 114.

In step S114, the ECU 8000 determines whether an illumination condition is satisfied. The illumination condition includes a condition that the count value of the timer be equal to or greater than the timer value A, and a condition that there be no change in the required shift. If the illumination condition is satisfied (i.e., YES in step S114), the process proceeds on to step S116. If not (i.e., NO in step S114), the process returns to step S108.

In step S116, the ECU 8000 executes illumination control. For example, the ECU 8000 controls the display unit 102 to illuminate the upshift lamp 106 when the required shift is an upshift and illuminate the downshift lamp 104 when the required shift is a downshift.

In step S118, the ECU 8000 determines whether a downshift is required. If a downshift is required (i.e., YES in step S118), the process proceeds on to step S120. If not (i.e., NO in step S118), the process returns to step S108.

In step S120, the ECU 8000 sets the timer value B. Then in step S122, the ECU 8000 determines whether the count value of the timer is equal to or greater than the timer value B. If the count value is equal to or greater than the timer value B (i.e., YES in step S122), the process proceeds on to step S124. If not (i.e., NO in step S122), step S122 is repeated until the count value is equal to or greater than the timer value B, after which the process proceeds on to step S124.

In step S124, the ECU 8000 determines whether an illumination condition is satisfied. The illumination condition includes a condition that the count value of the timer be equal to or greater than the timer value B, and a condition that there be no change in the required shift. If the illumination condition is satisfied (i.e., YES in step S124), the process proceeds on to step S116. If not (i.e., NO in step S124), the process returns to step S108.

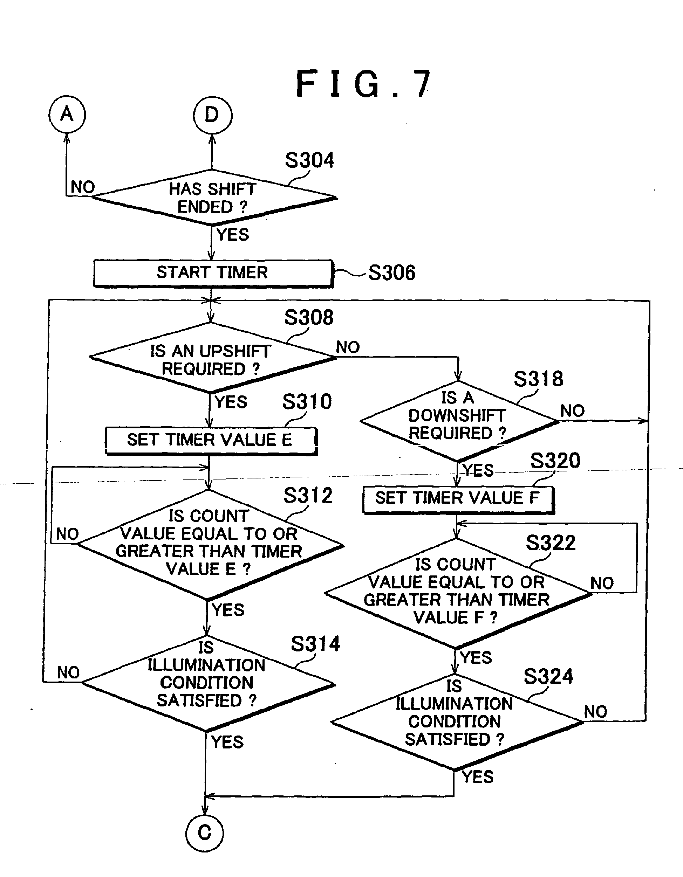

Next, referring to FIG 6, in step S202 the ECU 8000 determines whether the shift is a downshift. If the shift is a downshift (i.e., YES in step S202), the process proceeds on to step S204. If not (i.e., NO in step S202), the process proceeds on to step S304 shown in FIG. 7.

In step S204, the ECU 8000 determines whether the shift has ended. If the shift has ended (i.e., YES in step S204), the process proceeds on to step S206. If not (i.e., NO in step S204), the process returns to step S102 shown in FIG 5.

In step S206, the ECU 8000 starts to measure the elapsed time by starting a timer. Then in step S208, the ECU 8000 determines whether an upshift is required. If a downshift is required (i.e., YES in step S208), the process proceeds on to step S210. If not (i.e., NO in step S208), the process proceeds on to step S218.

In step S210, the ECU 8000 sets the timer value C. Then in step S212, the ECU 8000 determines whether the count value of the timer is equal to or greater than the timer value C. If the count value is equal to or greater than the timer value C (i.e., YES in step S212), the process proceeds on to step S214. If not (i.e., NO in step S212), step S212 is repeated until the count value is equal to or greater than the timer value C, after which the process proceeds on to step S214.

In step S214, the ECU 8000 determines whether an illumination condition is satisfied. The illumination condition includes a condition that the count value of the timer be equal to or greater than the timer value C, and a condition that there be no change in the required shift. If the illumination condition is satisfied (i.e., YES in step S214), the process proceeds on to step S116 shown in FIG 5. If not (i.e., NO in step S214), the process returns to step S208.

In step S218, the ECU 8000 determines whether a downshift is required. If a downshift is required (i.e., YES in step S218), the process proceeds on to step S220. if not (i.e., NO in step S218), the process returns to step S208.

In step S220, the ECU 8000 sets the timer value D. Then in step S222, the ECU 8000 determines whether the count value of the timer is equal to or greater than the timer value D. If the count value is equal to or greater than the timer value D (i.e., YES in step S222), the process proceeds on to step S224. If not (i.e., NO in step S222), step S222 is repeated until the count value is equal to or greater than the timer value D, after which the process proceeds on to step S224.

In step S224, the ECU 8000 determines whether an illumination condition is satisfied. The illumination condition includes a condition that the count value of the timer be equal to or greater than the timer value D, and a condition that there be no change in the required shift. If the illumination condition is satisfied (i.e., YES in step S224), the process proceeds on to step S116 shown in FIG 5. If not (i.e., NO in step S224), the process returns to step S208.

Next, referring to FIG. 7, in step S304, the ECU 8000 determines whether the shift has ended. If the shift has ended (i.e., YES in step S304), the process proceeds on to step S306. If not (i.e., NO in step S304), the process returns to step S102 shown in FIG. 5.

In step S306, the ECU 8000 starts to measure the elapsed time by starting a timer. Then in step S308, the ECU 8000 determines whether an upshift is required. If a downshift is required (i.e., YES in step S308), the process proceeds on to step S310. If not (i.e., NO in step S308), the process proceeds on to step S318.

In step S310, the ECU 8000 sets the timer value E. Then in step S312, the ECU 8000 determines whether the count value of the timer is equal to or greater than the timer value E. If the count value is equal to or greater than the timer value E (i.e., YES in step S312), the process proceeds on to step S314. If not (i.e., NO in step S312), step S312 is repeated until the count value is equal to or greater than the timer value E, after which the process proceeds on to step S314.

In step S314, the ECU 8000 determines whether an illumination condition is satisfied. The illumination condition includes a condition that the count value of the timer be equal to or greater than the timer value E, and a condition that there be no change in the required shift. If the illumination condition is satisfied (i.e., YES in step S314), the process proceeds on to step S116 shown in FIG 5. If not (i.e., NO in step S314), the process returns to step S308.

In step S318, the ECU 8000 determines whether a downshift is required. If a downshift is required (i.e., YES in step S318), the process proceeds on to step S320. If not (i.e., NO in step S318), the process returns to step S308.

In step S320, the ECU 8000 sets the timer value F. Then in step S322, the ECU 8000 determines whether the count value of the timer is equal to or greater than the timer value F. If the count value is equal to or greater than the timer value F (i.e., YES in step S322), the process proceeds on to step S324. If not (i.e., NO in step S322), step S322 is repeated until the count value is equal to or greater than the timer value F, after which the process proceeds on to step S324.

In step S324, the ECU 8000 determines whether an illumination condition is satisfied. The illumination condition includes a condition that the count value of the timer be equal to or greater than the timer value F, and a condition that there be no change in the required shift. If the illumination condition is satisfied (i.e., YES in step S324), the process proceeds on to step S116 shown in FIG. 5. If not (i.e., NO in step S324), the process returns to step S308.

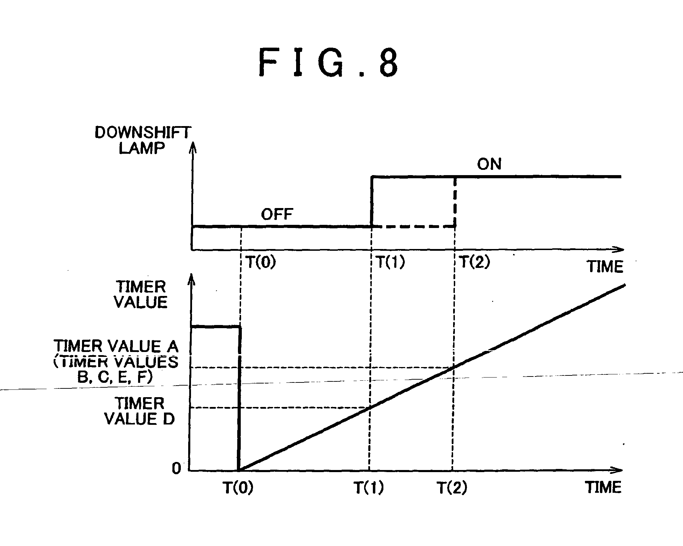

Now the operation of the ECU 8000 that forms part of the gear shift indicator according to this example embodiment, which is based on the foregoing structure and flowchart, will be described with reference to FIG 8.

In this description, a case will be assumed in which the vehicle is climbing a hill while in 3rd gear, for example. In this case, in order for the driver to shift into 2nd gear, he or she depresses the clutch pedal 8012 (i.e., YES in step S100) and shifts the shift lever 8004 into the position corresponding to 2nd gear (i.e., NO in step S102, YES in step S202). The driver then releases the clutch pedal 8012 (i.e., YES in step S204), thus ending the downshift.

Accordingly, the timer starts at time T(0) (step S206). At this time, when the gradient of the road becomes steep or the like such that the driving force of the vehicle becomes insufficient, a downshift is required (i.e., NO in step S208, YES in step S218). Therefore, the timer value D is set (step S220) and the shift instruction is delayed until the count value of the timer becomes equal to or greater than the timer value D (i.e., YES in step S222).

At time T(1), when the count value of the timer becomes equal to or greater than the timer value D (i.e., YES in step S222) and the illumination condition is satisfied (i.e., YES in step S224), illumination control is executed to illuminate the downshift lamp 104 (step S116).

The downshift lamp 104 is illuminated at this time earlier than it is with the timer values A to C, E, and F set in the other shift modes. Incidentally, in FIG 8, to facilitate the description, the timer values A to C, E, and F are all the same value. Alternatively, however, they may each be different values in accordance with the shift modes as long as they are all greater than the timer value D.

As described above, with the gear shift indicator according to this example embodiment, the driver can be instructed to downshift earlier by setting the start time from when the shift ends until the shift instruction starts to be given shorter. Therefore, the driver is able to recognize early on that the driving force of the vehicle is insufficient. As a result, the driver can be instructed early on to perform an appropriate shift that will prevent the engine from stalling. Meanwhile, appropriate times are set as start times for the other shift modes as well, which makes it possible to reliably prevent an instruction from being given that is against the intention of the driver, such as an upshift instruction right after the driver has just downshifted, for example. Accordingly, a gear shift indicator that instructs a driver to shift appropriately according to the state of the vehicle state, a gear shift indicating method, a program by which that method can be realized using a computer, and a recording medium on which that program is recorded, are able to be provided.

Also, by setting the lowest value from among a plurality of preset values as the start time, the driver is able to be instructed to downshift earlier than he or she is with other shift modes. As a result, the driver can be instructed early on to perform an appropriate shift that will prevent the engine from stalling due to insufficient vehicle driving force.

Incidentally, in the example embodiment described above, the timer starts after a shift ends, but it may also start after the start time is set, for example.

## Claims

1. A gear shift indicator which is provided in a vehicle and instructs a driver to shift gears in a transmission (2000) which is a manual transmission or an automatic transmission having a manual shift mode that can be shifted in response to an operation by the driver, comprising:
detecting means arranged to detect a state of the vehicle;
shift detecting means arranged to detect a state of a shift in the transmission;
shift ended determining means (406) arranged to determine whether a shift by the driver has ended based on the detected state of the shift;
first determining means (410) arranged to determine whether there is a need for the driver to shift into a higher gear based on the gear after the shift ends, a shift map, and the detected state of the vehicle;
second determining means (412) arranged to determine whether there is a need for the driver to shift into a lower gear based on the gear after the shift ends, a shift map, and the detected state of the vehicle;
setting means (414) arranged to set a start time from when the shift by the driver ends until the driver starts to be instructed to shift, based on the gear after the shift ends, the gear before the shift starts, and the determination results from the first determining means and the second determining means after the shift by the driver ends; and
instructing means (102) arranged to instruct the driver to shift according to the determination results when the set start time has passed,
**characterized in that**,
the setting means sets the start time shorter when the gear after the shift ends is a lower gear than the gear before the shift starts and it is determined by the second determining means that there is a need for the driver to shift into a lower gear after the shift ends, than when another determination is made.

2. The gear shift indicator according to claim 1, wherein
the setting means sets a predetermined value as the start time when the gear after the shift ends is a lower gear than the gear before the shift starts and it is determined by the second determining means that there is a need for the driver to shift into a lower gear, and the predetermined value is the lowest value from among a plurality of predetermined values corresponding to a first shift mode that is based on the gear after the shift by the driver ends and the gear before the shift by the driver starts, and a second shift mode that is based on the determination results from the first determining means and the second determining means.

3. The gear shift indicator according to claim 1 or 2, wherein the setting means sets the start time to zero when the gear after the shift ends is a lower gear than the gear before the shift starts and it is determined by the second determining means that there is a need for the driver to shift into a lower gear.

4. The gear shift indicator according to any one of claims 1 to 3, wherein the transmission is connected via a clutch (3200) to a power source (1000) mounted in the vehicle; and the shift detecting means detects the state of the shift based on the operating state of the clutch.

5. The gear shift indicator according to any one of claims 1 to 3, wherein the transmission shifts gears in response to operation of a shift lever (8004) by the driver, and the shift detecting means detects the state of the shift based on the state of the shift lever.

6. The gear shift indicator according to any one of claims 1 to 5, wherein the transmission is connected to a power source mounted in the vehicle; and the detecting means includes physical quantity detecting means for detecting a physical quantity related to the speed of the vehicle, and degree-of-requirement detecting means for detecting the degree to which an increase in output of the power source is required.

7. The gear shift indicator according to claim 6, wherein the physical quantity detecting means detects i) a wheel speed or ii) a rotation speed of an output shaft of the transmission as the physical quantity

8. The gear shift indicator according to claim 6, wherein the degree-of-requirement detecting means detects i) an accelerator operating amount or ii) a throttle opening amount as the degree to which an increase in output of the power source is required.

9. The gear shift indicator according to any one of claims 1 to 8, wherein after the driver is instructed to shift, the instructing means keeps instructing the driver to shift until the shift by the driver ends or until the determination results change.

10. A gear shift indicating method which instructs a driver to shift gears in a transmission (2000) mounted in a vehicle, which is a manual transmission or an automatic transmission having a manual shift mode that can be shifted in response to an operation by the driver, comprising:
detecting a state of the vehicle;
detecting a state of the shift in the transmission;
determining wether a shift by the driver has ended based on the detected state of the shift;
making a first determination regarding whether there is a need for the driver to shift into a higher gear based on the gear after the shift ends, a shift map, and the detected state of the vehicle;
making a second determination regarding whether there is a need for the driver to shift into a lower gear based on the gear after the shift ends, a shift map, and the detected state of the vehicle;
setting a start time from when the shift by the driver ends until the driver starts to be instructed to shift, based on the gear after the shift ends, the gear before the shift starts, and the determination results from the first determination and the second determination after the shift by the driver ends; and
instructing the driver to shift according to the determination results when the set start time has passed,
**characterized in that**,
setting the start time, the start time is set shorter when the gear after the shift ends is a lower gear than the gear before the shift starts and it is determined by the second determination that there is a need for the driver to shift into a lower gear after the shift ends, than when another determination is made.

11. The gear shift indicating method according to claim 10, wherein in setting the start time, a predetermined value is set as the start time when the gear after the shift ends is a lower gear than the gear before the shift starts and it is determined by the second determination that there is a need for the driver to shift into a lower gear; and the predetermined value is the lowest value from among a plurality of predetermined values correspond into to first shift mode that is based on the gear after the shift ends and the gear before the shift starts, and a second shift mode that is based on the determination results from the first determination and the second determination

12. The gear shift indicating method according to claim 10 or 11, wherein in setting the start time, the start time is set to zero when the gear after the shift ends is a lower gear than the gear before the shift starts and it is determined by the second determination that there is a need for the driver to shift into a lower gear.

13. The gear shift indicating method according to any one of claims 10 to 12, wherein detecting the state of the shift is done based on the operating state of a clutch of the transmission that is connected, via the clutch, to a power source mounted in the vehicle.

14. The gear shift indicating method according to any one of claims 10 to 12, wherein detecting the state of the shift is done based on the state of a shift lever of the transmission which shifts gears in response to operation of the shift lever by the driver.

15. The gear shift indicating method according to any one of claims 10 to 14, wherein detecting the state of the vehicle includes detecting the speed of the vehicle, and detecting the degree to which an increase in output of a power source mounted in the vehicle and connected to the transmission is required.

16. The gear shift indicating method according to claim 15, wherein the speed of the vehicle is detected based on i) a wheel speed or ii) a rotation speed of an output shaft of the transmission.

17. The gear shift indicating method according to claim 15, wherein the degree to which an increase in output of the power source is required is detected based on i) an accelerator operating amount or ii) a throttle opening amount.

18. The gear shift indicating method according to any one of claims 10 to 17, wherein instructing the driver to shift includes continuing to instruct the driver to shift after the driver is instructed to shift until the shift by the driver ends or until the determination results change.

## Patentansprüche

1. Schaltanzeiger, der in einem Fahrzeug vorgesehen ist und der einen Fahrer zum Schalten eines Getriebes (2000) auffordert, bei dem es sich um ein manuelles Getriebe oder um ein automatisches Getriebe mit einem Handschaltungsmodus handelt, das ansprechend auf eine Betätigung durch den Fahrer geschaltet werden kann, aufweisend:
ein Erfassungsmittel, das dafür ausgelegt ist, einen Zustand des Fahrzeugs zu erfassen;
ein Schalterfassungsmittel, das dafür ausgelegt ist, einen Schaltzustand des Getriebes zu erfassen;
ein Schaltende-Bestimmungsmittel (406), das dafür ausgelegt ist, auf Basis des erfassten Schaltzustands zu bestimmen, ob ein Schalten durch den Fahrer beendet wurde;
ein erstes Bestimmungsmittel (410), das dafür ausgelegt ist, aufgrund des nach dem Schaltende eingelegten Ganges, eines Schaltkennfelds und des erfassten Zustand des Fahrzeugs zu bestimmen, ob eine Notwendigkeit dafür besteht, dass der Fahrer in einen höheren Gang schaltet;
ein zweites Bestimmungsmittel (412), das dafür ausgelegt ist, auf Basis des nach dem Schaltende eingelegten Ganges, eines Schaltkennfelds und des erfassten Zustand des Fahrzeugs zu bestimmen, ob eine Notwendigkeit dafür besteht, dass der Fahrer in einen niedrigeren Gang schaltet;
ein Einstellmittel (414), das dafür ausgelegt ist, nach der Beendigung des Schaltens durch den Fahrer eine Startzeit zwischen der Beendigung des Schaltens durch den Fahrer und einem Beginn einer Schaltaufforderung an den Fahrer auf Basis des nach dem Schaltende eingelegten Ganges, des Ganges vor einem Schaltbeginn und von Bestimmungsergebnissen vom ersten Bestimmungsmittel und vom zweiten Bestimmungsmittel einzustellen; und
ein Aufforderungsmittel (102), das dafür ausgelegt ist, den Fahrer gemäß den Bestimmungsergebnissen zum Schalten aufzufordern, wenn die eingestellte Startzeit abgelaufen ist,
**dadurch gekennzeichnet, dass**
das Einstellmittel die Startzeit kürzer einstellt, wenn der Gang nach dem Schaltende ein niedrigerer Gang ist als der Gang vor dem Schaltbeginn, und vom zweiten Bestimmungsmittel bestimmt wird, dass eine Notwendigkeit dafür besteht,
dass der Fahrer nach dem Schaltende in einen niedrigeren Gang schaltet, als wenn eine andere Bestimmung getroffen würde.

2. Schaltanzeiger nach Anspruch 1, wobei
das Einstellmittel einen vorgegebenen Wert als Startzeit einstellt, wenn der Gang nach dem Schaltende ein niedrigerer Gang ist als der Gang vor dem Schaltbeginn, und wenn vom zweiten Bestimmungsmittel bestimmt wird, dass eine Notwendigkeit dafür besteht, dass der Fahrer in einen niedrigeren Gang schaltet; und der vorgegebene Wert der niedrigste Wert aus einer Mehrzahl von vorgegebenen Werten ist, die einem ersten Schaltmodus, der auf dem Gang nach der Beendigung des Schaltens durch den Fahrer und dem Gang vor dem Beginn des Schaltens durch den Fahrer beruht, und einem zweiten Schaltmodus, der auf den Bestimmungsergebnissen vom ersten Bestimmungsmittel und vom zweiten Bestimmungsmittel beruht, entsprechen.

3. Schaltanzeiger nach Anspruch 1 oder 2, wobei das Einstellmittel die Startzeit auf Null einstellt, wenn der Gang nach dem Schaltende ein niedrigerer Gang ist als der Gang vor dem Schaltbeginn, und vom zweiten Bestimmungsmittel bestimmt wird, dass eine Notwendigkeit dafür besteht, dass der Fahrer in einen niedrigeren Gang schaltet.

4. Schaltanzeiger nach einem der Ansprüche 1 bis 3, wobei das Getriebe über eine Kupplung (3200) mit einer Leistungsquelle (1000) verbunden ist, die in dem Fahrzeug eingebaut ist; und das Schalterfassungsmittel den Schaltzustand auf Basis des Betätigungszustands der Kupplung erfasst.

5. Schaltanzeiger nach einem der Ansprüche 1 bis 3, wobei das Getriebe das Schalten als Antwort auf eine Betätigung des Schalthebels (8004) durch den Fahrer durchführt; und das Schalterfassungsmittel den Schaltzustand auf Basis des Zustands des Schalthebels erfasst.

6. Schaltanzeiger nach einem der Ansprüche 1 bis 5, wobei das Getriebe mit einer Leistungsquelle verbunden ist, die im Fahrzeug eingebaut ist; und das Erfassungsmittel ein Mittel zum Erfassen einer physikalischen Größe, das eine mit der Geschwindigkeit des Fahrzeugs in Beziehung stehende physikalische Größe erfasst, und ein Dringlichkeitserfassungsmittel aufweist, das die Dringlichkeit einer Erhöhung der von der Leistungsquelle ausgegebenen Leistung erfasst.

7. Schaltanzeiger nach Anspruch 6, wobei das Mittel zum Erfassen einer physikalischen Größe i) eine Raddrehzahl oder ii) ein Drehzahl einer Abtriebswelle des Getriebes als die physikalische Größe erfasst.

8. Schaltanzeiger nach Anspruch 6, wobei das Dringlichkeitserfassungsmittel i) einen Öffnungsgrad einer Beschleunigungseinrichtung oder ii) einen Öffnungsgrad einer Drosselklappe als die Dringlichkeit der Erhöhung der von der Leistungsquelle ausgegebenen Leistung erfasst.

9. Schaltanzeiger nach einem der Ansprüche 1 bis 8, wobei das Aufforderungsmittel den Fahrer nach einer Schaltaufforderung an den Fahrer solange zum Schalten auffordert, bis das Schalten durch den Fahrer beendet ist oder bis die Bestimmungsergebnisse sich ändern.

10. Schaltanzeigeverfahren, das den Fahrer zum Schalten eines in einem Fahrzeug eingebauten Getriebes (2000) auffordert, bei dem es sich um ein manuelles Getriebe oder um ein automatisches Getriebe mit einem Handschaltungsmodus handelt, das ansprechend auf eine Betätigung durch den Fahrer geschaltet werden kann, aufweisend:
Erfassen eines Fahrzeugzustands;
Erfassen eines Schaltzustands des Getriebes;
Bestimmen, ob ein Schalten durch den Fahrer beendet wurde, auf Basis des erfassten Schaltzustands;
Durchführen einer ersten Bestimmung im Hinblick darauf, ob eine Notwendigkeit dafür besteht, dass der Fahrer in einen höheren Gang schaltet, auf Basis des nach einem Schaltende eingelegten Ganges, eines Schaltkennfelds und des erfassten Fahrzeugzustands;
Durchführen einer zweiten Bestimmung im Hinblick darauf, ob eine Notwendigkeit dafür besteht, dass der Fahrer in einen niedrigeren Gang schaltet, auf Basis des nach dem Schaltende eingelegten Ganges, eines Schaltkennfelds und des erfassten Fahrzeugzustands;
Einstellen einer Startzeit zwischen einer Beendigung des Schaltens durch den Fahrer und einem Beginn einer Schaltaufforderung an den Fahrer auf Basis des nach dem Schaltende eingelegten Ganges, des Ganges vor einem Schaltbeginn und der Bestimmungsergebnisse aus der ersten Bestimmung und der zweiten Bestimmung; und
Ausgeben einer Schaltaufforderung an den Fahrer gemäß den Bestimmungsergebnissen, wenn die eingestellte Startzeit abgelaufen ist,
**dadurch gekennzeichnet, dass**
beim Einstellen der Startzeit die Startzeit kürzer eingestellt wird, wenn der Gang nach dem Schaltende ein niedrigerer Gang ist als der Gang vor dem Schaltbeginn und wenn durch die zweite Bestimmung bestimmt wird, dass eine Notwendigkeit dafür besteht, dass der Fahrer nach dem Schaltende in einen niedrigeren Gang schaltet, als wenn eine andere Bestimmung getroffen würde.

11. Schaltanzeigeverfahren nach Anspruch 10, wobei beim Einstellen der Startzeit ein vorgegebener Wert als die Startzeit eingestellt wird, wenn der Gang nach dem Schaltende ein niedrigerer Gang ist als der Gang vor dem Schaltbeginn, und wenn durch die zweite Bestimmung bestimmt wird, dass eine Notwendigkeit dafür besteht, dass der Fahrer in einen niedrigeren Gang schaltet; und der vorgegebene Wert der niedrigste Wert aus einer Mehrzahl von vorgegebenen Werten ist, die einem ersten Schaltmodus, der auf dem Gang nach der Beendigung des Schaltens durch den Fahrer und dem Gang vor dem Beginn des Schaltens durch den Fahrer beruht, und einem zweiten Schaltmodus, der auf den Bestimmungsergebnissen vom ersten Bestimmungsmittel und vom zweiten Bestimmungsmittel beruht, entsprechen.

12. Schaltanzeigeverfahren nach Anspruch 10 oder 11, wobei beim Einstellen der Sartzeit die Startzeit auf Null eingestellt wird, wenn der Gang nach dem Schaltende ein niedrigerer Gang ist als der Gang vor dem Schaltbeginn, und wenn durch die zweite Bestimmung bestimmt wird, dass eine Notwendigkeit dafür besteht, dass der Fahrer in einen niedrigeren Gang schaltet.

13. Schaltanzeigeverfahren nach einem der Ansprüche 10 bis 12, wobei die Erfassung des Schaltzustands auf Basis des Betätigungszustands einer Kupplung des Getriebes durchgeführt wird, das über die Kupplung mit einer Leistungsquelle verbunden ist, die in dem Fahrzeug eingebaut ist.

14. Schaltanzeigeverfahren nach einem der Ansprüche 10 bis 12, wobei die Erfassung des Schaltzustands auf Basis des Zustands eines Schalthebels des Getriebes durchgeführt wird, das ansprechend auf die Betätigung des Schalthebels durch den Fahrer ein Schalten durchführt,

15. Schaltanzeigeverfahren nach einem der Ansprüche 10 bis 14, wobei das Erfassen des Fahrzeugzustands das Erfassen der Geschwindigkeit des Fahrzeugs und das Erfassen der Dringlichkeit einer Erhöhung der von der Leistungsquelle ausgegebenen Leistung beinhaltet.

16. Schaltanzeigeverfahren nach Anspruch 15, wobei die Geschwindigkeit des Fahrzeugs auf Basis von i) einer Raddrehzahl oder ii) einer Drehzahl einer Abtriebswelle des Getriebes erfasst wird.

17. Schaltanzeigeverfahren nach Anspruch 15, wobei die Dringlichkeit einer Erhöhung der von der Leistungsquelle ausgegebenen Leistung auf Basis von i) einem Öffnungsgrad einer Beschleunigungseinrichgung oder ii) einem Öffnungsgrad einer Drosselklappe erfasst wird.

18. Schaltanzeigeverfahren nach einem der Ansprüche 10 bis 17, wobei die Schaltaufforderung an den Fahrer eine Fortsetzung der Schaltaufforderung an den Fahrer, nachdem dieser zum Schalten aufgefordert wurde, bis das Schalten durch den Fahrer beendet wird oder bis die Bestimmungsergebnisse sich ändern, beinhaltet.

## Revendications

1. Indicateur de changement de vitesse qui est prévu dans un véhicule et qui ordonne à un conducteur de changer de vitesse dans une transmission (2000) qui est une transmission manuelle ou une transmission automatique comportant un mode de changement de vitesse manuel dont la vitesse peut être changée en réponse à un actionnement par le conducteur, comprenant :
des moyens de détection agencés pour détecter un état du véhicule ;
des moyens de détection de changement de vitesse agencés pour détecter un état d'un changement de vitesse dans la transmission ;
des moyens de détermination de fin de changement de vitesse (406) agencés pour déterminer si un changement de vitesse effectué par le conducteur est terminé sur la base de l'état détecté du changement de vitesse ;
des premiers moyens de détermination (410) agencés pour déterminer s'il est nécessaire que le conducteur passe à une vitesse supérieure sur la base de la vitesse à la fin du changement de vitesse, d'une carte de changement de vitesse et de l'état détecté du véhicule ;
des deuxièmes moyens de détermination (412) agencés pour déterminer s'il est nécessaire que le conducteur passe à une vitesse inférieure sur la base de la vitesse à la fin du changement de vitesse, d'une carte de changement de vitesse et de l'état détecté du véhicule ;
des moyens de paramétrage (414) agencés pour fixer un temps de début de l'instant auquel le changement de vitesse effectué par le conducteur se termine jusqu'à ce qu'il soit ordonné au conducteur de changer de vitesse, sur la base de la vitesse à la fin du changement de vitesse, de la vitesse avant le début du changement de vitesse, et des résultats de détermination des premiers moyens de détermination et des deuxièmes moyens de détermination à la fin du changement de vitesse effectué par le conducteur ; et
des moyens d'instruction (102) agencés pour ordonner au conducteur de changer de vitesse en fonction des résultats de détermination lorsque le temps de début fixé s'est écoulé,
**caractérisé en ce que**,
les moyens de paramétrage fixent le temps de début à une valeur plus courte lorsque la vitesse à la fin du changement de vitesse est une vitesse inférieure à la vitesse avant que le changement de vitesse ne débute et lorsqu'il est déterminé, par les deuxièmes moyens de détermination, qu'il est nécessaire que le conducteur passe, à la fin du changement de vitesse, à une vitesse inférieure à une vitesse lorsqu'une autre détermination est effectuée.

2. Indicateur de changement de vitesse selon la revendication 1, dans lequel les moyens de paramétrage fixent une valeur prédéterminée en tant que temps de début lorsque la vitesse à la fin du changement de vitesse est une vitesse inférieure à la vitesse avant que le changement de vitesse ne débute et lorsqu'il est déterminé, par les deuxièmes moyens de détermination, qu'il est nécessaire que le conducteur passe à une vitesse inférieure ; et la valeur prédéterminée est la valeur la plus faible parmi une pluralité de valeurs prédéterminées correspondant à un premier mode de changement de vitesse qui est basé sur la vitesse à la fin du changement de vitesse effectué par le conducteur et la vitesse avant que le changement de vitesse effectué par le conducteur ne débute, et un deuxième mode de changement de vitesse qui est basé sur les résultats de détermination des premiers moyens de détermination et des deuxièmes moyens de détermination.

3. Indicateur de changement de vitesse selon la revendication 1 ou 2, dans lequel les moyens de paramétrage fixent le temps de début à zéro lorsque la vitesse à la fin du changement de vitesse est une vitesse inférieure à la vitesse avant que le changement de vitesse ne débute et lorsqu'il est déterminé, par les deuxièmes moyens de détermination, qu'il est nécessaire que le conducteur passe à une vitesse inférieure.

4. Indicateur de changement de vitesse selon l'une quelconque des revendications 1 à 3, dans lequel la transmission est reliée, par l'intermédiaire d'un embrayage (3200), à une source de puissance (1000) montée dans le véhicule ; et les moyens de détection de changement de vitesse détectent l'état du changement de vitesse sur la base de l'état de fonctionnement de l'embrayage.

5. Indicateur de changement de vitesse selon l'une quelconque des revendications 1 à 3, dans lequel la transmission change les vitesses en réponse à l'actionnement d'un levier de changement de vitesse (8004) par le conducteur ; et les moyens de détection de changement de vitesse détectent l'état du changement de vitesse sur la base de l'état du levier de changement de vitesse.

6. Indicateur de changement de vitesse selon l'une quelconque des revendications 1 à 5, dans lequel la transmission est reliée à une source de puissance montée dans le véhicule ; et les moyens de détection comprennent des moyens de détection de quantité physique pour détecter une quantité physique relative à la vitesse du véhicule, et des moyens de détection de degré d'exigence pour détecter le degré auquel une augmentation de la sortie de la source de puissance est nécessaire.

7. Indicateur de changement de vitesse selon la revendication 6, dans lequel les moyens de détection de quantité physique détectent i) une vitesse de roue ou ii) une vitesse de rotation d'un arbre de sortie de la transmission en tant que quantité physique.

8. Indicateur de changement de vitesse selon la revendication 6, dans lequel les moyens de détection de degré d'exigence détectent i) une quantité d'actionnement d'accélérateur ou ii) une quantité d'ouverture de papillon en tant que degré auquel une augmentation de la sortie de la source de puissance est nécessaire.

9. Indicateur de changement de vitesse selon l'une quelconque des revendications 1 à 8, dans lequel, après qu'il a été ordonné au conducteur de changer de vitesse, les moyens d'instruction continuent d'ordonner au conducteur de changer de vitesse jusqu'à ce que le changement de vitesse effectué par le conducteur se termine ou jusqu'à ce que les résultats de détermination changent.

10. Procédé d'indication de changement de vitesse qui ordonne à un conducteur de changer de vitesse dans une transmission (2000) montée dans un véhicule, qui est une transmission manuelle ou une transmission automatique comportant un mode de changement de vitesse manuel dont la vitesse peut être changée en réponse à un actionnement par le conducteur, consistant à :
détecter un état du véhicule ;
détecter un état du changement de vitesse dans la transmission ;
déterminer si un changement de vitesse effectué par le conducteur est terminé sur la base de l'état détecté du changement de vitesse ;
effectuer une première détermination concernant le fait qu'il est nécessaire ou non que le conducteur passe à une vitesse supérieure sur la base de la vitesse à la fin du changement de vitesse, d'une carte de changement de vitesse, et de l'état détecté du véhicule ;
effectuer une deuxième détermination concernant le fait qu'il est nécessaire ou non que le conducteur passe à une vitesse inférieure sur la base de la vitesse à la fin du changement de vitesse, d'une carte de changement de vitesse, et de l'état détecté du véhicule ;
fixer un temps de début de l'instant auquel le changement de vitesse effectué par le conducteur se termine jusqu'à ce qu'il soit ordonné au conducteur de changer de vitesse, sur la base de la vitesse à la fin du changement de vitesse, de la vitesse avant que le changement de vitesse ne débute, et des résultats de détermination de la première détermination et de la deuxième détermination à la fin du changement de vitesse effectué par le conducteur ; et
ordonner au conducteur de changer de vitesse en fonction des résultats de détermination lorsque le temps de début fixé s'est écoulé,
**caractérisé en ce que**
lors de la détermination du temps de début, le temps de début est fixé à une valeur plus courte lorsque la vitesse à la fin du changement de vitesse est une vitesse inférieure à la vitesse avant que le changement de vitesse ne débute et lorsqu'il est déterminé, par la deuxième détermination, qu'il est nécessaire que le conducteur passe, à la fin du changement de vitesse, à une vitesse inférieure à une vitesse lorsqu'une autre détermination est effectuée.

11. Procédé d'indication de changement de vitesse selon la revendication 10, dans lequel, lors de la détermination du temps de début, une valeur prédéterminée est fixée en tant que temps de début lorsque la vitesse à la fin du changement de vitesse est une vitesse inférieure à la vitesse avant que le changement de vitesse ne débute et lorsqu'il est déterminé, par la deuxième détermination, qu'il est nécessaire que le conducteur passe à une vitesse inférieure ; et la valeur prédéterminée est la valeur la plus faible parmi une pluralité de valeurs prédéterminées correspondant à un premier mode de changement de vitesse qui est basé sur la vitesse à la fin du changement de vitesse et la vitesse avant que le changement de vitesse ne débute, et à un deuxième mode de changement de vitesse qui est basé sur les résultats de détermination de la première détermination et de la deuxième détermination.

12. Procédé d'indication de changement de vitesse selon la revendication 10 ou 11, dans lequel, lors de la détermination du temps de début, le temps de début est fixé à zéro lorsque la vitesse à la fin du changement de vitesse est une vitesse inférieure à la vitesse avant que le changement de vitesse ne débute et lorsqu'il est déterminé, par la deuxième détermination, qu'il est nécessaire que le conducteur passe à une vitesse inférieure.

13. Procédé d'indication de changement de vitesse selon l'une quelconque des revendications 10 à 12, dans lequel la détection de l'état du changement de vitesse est effectuée sur la base de l'état de fonctionnement d'un embrayage de la transmission qui est reliée, par l'intermédiaire de l'embrayage, à une source de puissance montée dans le véhicule.

14. Procédé d'indication de changement de vitesse selon l'une quelconque des revendications 10 à 12, dans lequel la détection de l'état du changement de vitesse est effectuée sur la base de l'état d'un levier de changement de vitesse de la transmission qui change les vitesses en réponse à l'actionnement du levier de changement de vitesse par le conducteur.

15. Procédé d'indication de changement de vitesse selon l'une quelconque des revendications 10 à 14, dans lequel la détection de l'état du véhicule comprend la détection de la vitesse du véhicule, et la détection du degré auquel une augmentation de la sortie d'une source de puissance montée dans le véhicule et reliée à la transmission est nécessaire.

16. Procédé d'indication de changement de vitesse selon la revendication 15, dans lequel la vitesse du véhicule est détectée sur la base i) d'une vitesse de roue ou ii) d'une vitesse de rotation d'un arbre de sortie de la transmission.

17. Procédé d'indication de changement de vitesse selon la revendication 15, dans lequel le degré auquel une augmentation de la sortie de la source de puissance est nécessaire est détecté sur la base i) d'une quantité d'actionnement d'accélérateur ou ii) d'une quantité d'ouverture de papillon.

18. Procédé d'indication de changement de vitesse selon l'une quelconque des revendications 10 à 17, dans lequel l'instruction donnée au conducteur de changer de vitesse consiste à continuer d'ordonner au conducteur de changer de vitesse après qu'il a été ordonné au conducteur de changer de vitesse jusqu'à ce que le changement de vitesse effectué par le conducteur se termine ou jusqu'à ce que les résultats de détermination changent.
